# FASCICULE DE BREVET EUROPEEN

(11) **EP 2 635 836 B1**
(45) Date de publication et mention de la délivrance du brevet: **29.07.2015**
(21) Numéro de dépôt: 11799743.7
(22) Date de dépôt: 31.10.2011
(51) Int. Cl.: F16L 25/12, F16L 37/00

(54) **DISPOSITIF DE RACCORDEMENT DESTINÉ À SE RACCORDER À AU MOINS UNE CANALISATION**
VORRICHTUNG ZUR SELBSTVERBINDUNG AN MINDESTENS EINER ROHRLEITUNG
DEVICE FOR SELF CONNECTION TO AT LEAST ONE PIPE SECTION

(30) Priorité: 04.11.2010 FR 1059101
(43) Date de publication de la demande: 11.09.2013
(73) Titulaire: Electricité de France, 75008 Paris (FR)
(72) Inventeur: LEGENDRE, Christophe, F-50690 Virandeville (FR)
(74) Mandataire: Cabinet Plasseraud
(86) Numéro de dépôt international: PCT/FR2011/052553
(87) Numéro de publication internationale: WO 2012/059684

(56) Documents cités:
- EP-A1- 0 544 947
- DE-U- 1 962 746
- US-A- 4 767 136
- US-A1- 2009 289 453

## Description

La présente invention se rapporte à un dispositif de raccordement destiné à se raccorder à au moins une canalisation et en particulier une canalisation située dans un environnement hostile, comprenant au moins un système télescopique de raccordement monté sur un boîtier support et apte à être actionné selon un axe de translation par un mécanisme d'actionnement afin de se déployer et se raccorder à une dite canalisation.

Un dispositif de raccordement de ce type est connu de la publication de brevet FR1536180 qui divulgue un système à deux éléments tubulaires télescopiques opposés actionnés par un mécanisme d'actionnement hydraulique ou pneumatique. Le mécanisme d'actionnement comprend des pistons montés dans des alésages d'un boîtier support et agencés pour pousser les éléments tubulaires vers l'extérieur du boîtier. Les éléments tubulaires sont reliés entre eux de façon étanche par un soufflet. Le système peut faire communiquer entre elles deux canalisations distantes, en étant mis en place et commandé par un robot adapté pour apporter du fluide sous pression au mécanisme d'actionnement. L e raccordement des deux canalisations peut donc s'effectuer sans intervention humaine à proximité immédiate, ce qui est avantageux en milieu hostile comme par exemple dans un environnement radioactif tel qu'à l'intérieur d'une enceinte abritant un réacteur nucléaire.

Le document EP 0 544 947 A1 décrit un dispositif selon le préambule de la revendication 1.

Ces dispositifs de raccordement connus présentent néanmoins divers inconvénients. En particulier, concernant le dispositif selon le brevet FR1536180, le mécanisme d'actionnement est complexe car il nécessite quatre paires de pistons opposés répartis circonférentiellement entre deux brides qui sont reliées entre elles par des ressorts de traction, de façon à ce que la résultante des efforts exercés sur un élément télescopique soit dirigée selon l'axe de translation de l'élément. De plus, le maintien d'une position de raccordement est tributaire de la tenue en pression du circuit hydraulique ou pneumatique du mécanisme d'actionnement, ce qui pose des problèmes de fiabilité, sans compter qu'une éventuelle fuite de liquide sous pression risque de contaminer l'environnement au voisinage du dispositif. Par ailleurs, un dispositif de cette conception nécessite que les canalisations aient des embouchures évasées afin de réaliser un raccordement étanche, et n'est pas adapté pour raccorder plus de deux canalisations distantes.

La présente invention vise à remédier aux inconvénients susmentionnés et en particulier vise à procurer un dispositif de raccordement ayant un mécanisme d'actionnement plus simple, plus fiable, et pouvant éviter tout risque de contamination de l'environnement.

A cet effet, l'invention a pour objet un dispositif de raccordement selon la revendication 1.

Grâce aux dispositions d'un dispositif selon l'invention, la liaison entre un système télescopique et le mécanisme d'actionnement est réalisée à l'intérieur du boîtier support. Ceci permet qu'une partie du mécanisme d'actionnement soit disposée dans le prolongement axial du système télescopique, et permet par conséquent de concevoir un mécanisme d'actionnement relativement peu encombrant pour avancer ou reculer un élément télescopique en exerçant sur lui des efforts qui restent substantiellement dirigés selon l'axe de translation de l'élément. De plus, grâce à la tige de commande, on peut se passer d'un mécanisme d'actionnement hydraulique ou pneumatique, ce qui évite en particulier les risques liés à une fuite d'un fluide de commande et rend donc plus fiable le maintien d'une position de raccordement

Selon l'invention ledit mécanisme d'actionnement comprend une unique dite première partie adaptée pour actionner ensemble plusieurs dits systèmes télescopiques de raccordement; ce qui simplifie le mécanisme d'actionnement et diminue son encombrement.

Dans des modes de réalisation préférés d'un dispositif de raccordement selon l'invention, on a recours notamment à l'une ou l'autre des dispositions suivantes :
au moins un dit système télescopique de raccordement comprend un canal intérieur adapté pour permettre un passage de fluide entre la canalisation à laquelle il se raccorde et un espace intérieur dudit boîtier support; ce qui permet de faire communiquer de manière fluidique ladite canalisation et l'intérieur du boîtier, et dans le cas de plusieurs canalisations à raccorder permet de faire communiquer entre elles les canalisations par l'intermédiaire du dispositif de raccordement ;
au moins un dit système télescopique de raccordement est adapté pour obturer substantiellement la canalisation à laquelle il se raccorde; ce qui procure un dispositif de raccordement apte à boucher complètement ou partiellement au moins une canalisation à laquelle le dispositif se raccorde ;
ladite tige de commande traverse de façon étanche au moins une paroi délimitant ledit espace intérieur du boîtier support; ce qui permet de ne pas laisser fuir vers l'environnement du fluide provenant d'une canalisation et circulant dans le boîtier support ;
ladite tige de commande s'étend selon un axe de tige sensiblement perpendiculaire à l'axe de translation de chaque système télescopique de raccordement et possède une liberté. de rotation autour de son axe de tige; ce qui est avantageux en termes d'encombrement du mécanisme et de réalisation d'une traversée étanche d'une paroi du boîtier ;
ladite première partie du mécanisme d'actionnement comprend un moyeu solidaire en rotation de ladite tige de commande, ledit moyeu étant relié mécaniquement à des éléments mobiles en translation desdits systèmes télescopiques de raccordement par des bielles articulées; ce qui est avantageux en termes de simplicité et d'encombrement du mécanisme ;
au moins un dit système télescopique de raccordement comprend un élément tubulaire mobile en translation et muni d'au moins un joint gonflable; ce qui permet de réaliser un raccordement étanche entre l'élément tubulaire télescopique et la canalisation correspondante sans être tributaire de la configuration de l'embouchure de la canalisation, il n'est par exemple pas nécessaire d'avoir une embouchure évasée comme c'est le cas pour le dispositif connu mentionné en introduction ;
ledit élément tubulaire présente un diamètre extérieur inférieur à un diamètre intérieur d'une canalisation à laquelle il est apte à se raccorder, et ledit joint gonflable est monté sur une surface extérieure dudit élément tubulaire; ce qui est adapté à de nombreuses configurations d'embouchures de canalisations ;
ledit joint gonflable est alimenté en fluide par un circuit de tuyauterie comprenant une partie souple disposée dans ledit boîtier support ou à proximité de ce dernier, ledit circuit de tuyauterie comprenant en outre une partie extérieure disposée en dehors dudit boîtier support et s'étendant sensiblement parallèlement à ladite tige de commande; ce qui permet de gonfler le joint avec un gaz ou un fluide alimenté par une pompe pouvant être installée à distance du boîtier support ;
le dispositif de raccordement comprend en outre un système de positionnement et de guidage comprenant un châssis adapté pour porter ledit boîtier support ;
ledit système de commande comprend une unité de motorisation supportée par ledit châssis et adaptée pour actionner en rotation ladite tige de commande ;
ledit système de positionnement et de guidage comprend des jambes de positionnement télescopiques supportant ledit châssis et munies de vérins actionnables à distance afin de pouvoir déplacer ledit châssis selon une direction sensiblement verticale.

D'autres caractéristiques et avantages ressortent de la description qui va suivre d'exemples non limitatifs de modes de réalisation, en référence aux figures dans lesquelles :
La figure 1 représente, schématiquement une vue de dessus partielle en coupe horizontale d'un dispositif de raccordement selon un premier mode de réalisation de l'invention, le dispositif étant prêt à se déployer de façon à se raccorder à deux canalisations ;
La figure 2 représente schématiquement le dispositif de la figure 1 dans une position déployée dans laquelle le dispositif est raccordé aux deux canalisations de façon étanche ;
La figure 3 représente schématiquement une vue latérale en coupe du premier mode de réalisation du dispositif de raccordement mis en place sur une cuve de réacteur nucléaire, le dispositif étant prêt à être raccordé à des canalisations d'un circuit primaire de refroidissement du réacteur ;
La figure 4 représente schématiquement une vue de dessus partielle en coupe horizontale d'un dispositif de raccordement selon un deuxième mode de réalisation de l'invention dans lequel le dispositif est adapté pour se raccorder à quatre canalisations.

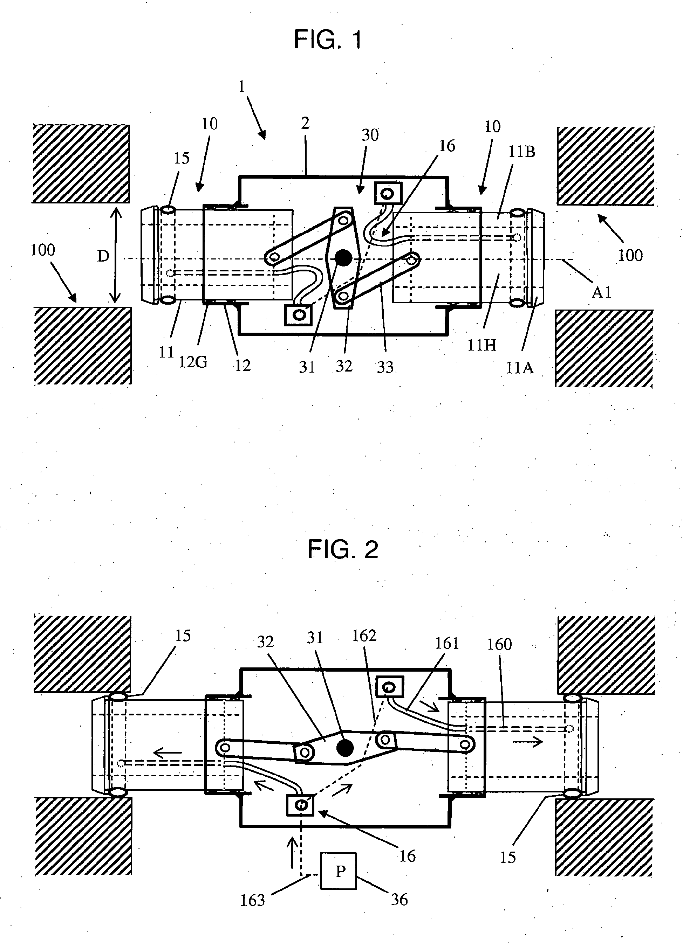

Le dispositif de raccordement 1 représenté schématiquement sur la FIG.1 est mis en place entre deux canalisations 100 distantes que l'on souhaite raccorder entre elles ou que l'on souhaite substantiellement boucher. Il comprend deux systèmes télescopiques de raccordement 10 s'étendant selon un même axe longitudinal A1 dans des directions opposées et montés sur un même boîtier support 2. Chaque système télescopique de raccordement 10 comprend un élément tubulaire fixe de guidage 12 solidaire du boîtier 2, et un élément tubulaire mobile 11 pouvant coulisser en translation dans l'élément tubulaire de guidage 12 selon l'axe A1. Un contact étanche est procuré entre les éléments tubulaires 11 et 12 d'un système télescopique 10 grâce à des joints d'étanchéité 12G montés sur une surface intérieure de l'élément tubulaire de guidage 12.

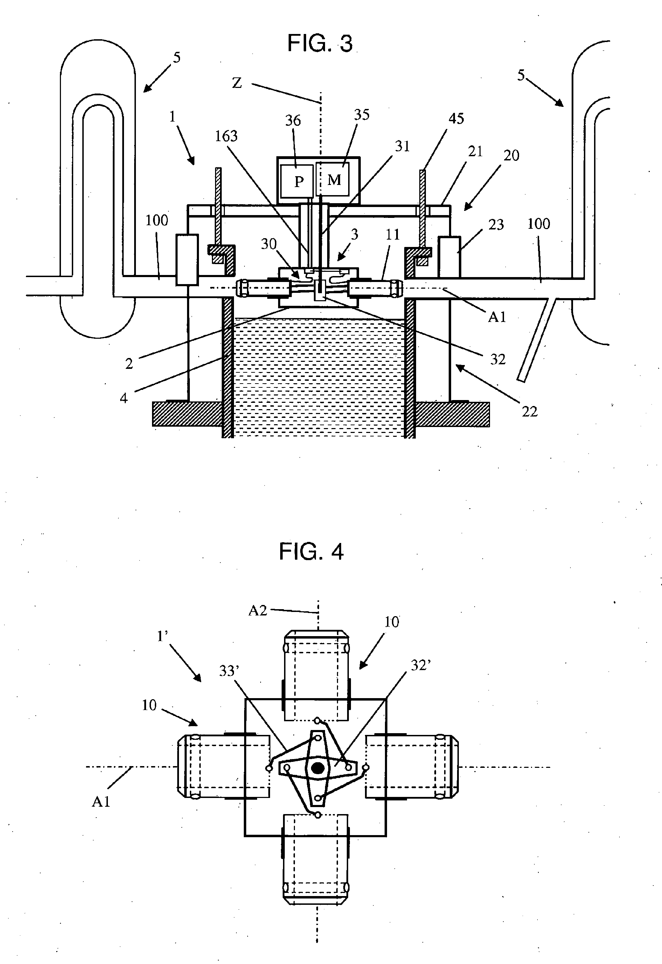

L'élément tubulaire mobile 11 de chaque système télescopique 10 peut être actionné en translation selon l'axe A1 par un mécanisme d'actionnement 3 qui comprend une première partie 30 disposée à l'intérieur du boîtier support 2. Cette première partie 30 comprend un moyeu commun 32 et deux bielles articulées 33 qui relient mécaniquement le moyeu 32 à chaque élément tubulaire mobile 11. Le mécanisme d'actionnement 3 comprend une deuxième partie qui comprend un système de commande 35 disposé à l'extérieur du boîtier 2 et une tige de commande 31 traversant une paroi du boîtier 2 pour relier la première partie 30 au système de commande 35 (FIG.3).

La tige de commande 31 s'étend selon un axe de tige Z sensiblement perpendiculaire à l'axe de translation A1 de chaque système télescopique de raccordement 10, et possède une liberté de rotation autour de son axe de tige (FIG.3). Le système de commande 35 est adapté pour actionner en rotation la tige de commande 31 afin d'entraîner en rotation le moyeu 32 pour déplacer les bielles articulées 33 et donc les éléments tubulaires mobiles 11. Dans le premier mode de réalisation représenté, la tige de commande 31 est fixée au centre du moyeu 32, ce dernier étant solidaire en rotation de la tige, mais il est aussi possible de prévoir une liaison indirecte entre la tige et le moyeu par exemple par des engrenages.

Chaque élément tubulaire mobile 11 présente avantageusement une partie frontale 11A de surface extérieure généralement tronconique et une partie principale 11B de surface extérieure généralement cylindrique. Le plus grand diamètre de la partie frontale 11A est prévu quelque peu supérieur au diamètre extérieur de la partie principale 11B et quelque peu inférieur au diamètre intérieur D de la canalisation 100 à laquelle l'élément tubulaire 11 est apte à se raccorder. De cette façon, une partie avant de chaque élément tubulaire 11 peut être introduite dans la canalisation 100 correspondante. Afin de réaliser un raccordement étanche, chaque élément tubulaire 11 est muni d'au moins un joint gonflable 15 disposé de manière circonférentielle avec contact étanche sur la surface extérieure de la partie principale 11B à proximité de la partie frontale 11A.

Avantageusement, dans son état dégonflé comme représenté sur la FIG.1, le diamètre extérieur d'un joint gonflable 15 n'excède pas le plus grand diamètre de la partie frontale 11A, de façon à ne pas ou quasiment pas faire frotter le joint contre la paroi intérieure d'une canalisation 100 lors de l'introduction de l'élément tubulaire 11. Chaque joint gonflable 15 est alimenté en fluide par un circuit de tuyauterie 16. Le fluide peut être un liquide ou un gaz, et on pourra préférer un gaz à un liquide en particulier afin d'éviter toute contamination de l'environnement par du liquide en cas de fuite d'un joint.

Dans le premier mode de réalisation représenté, chaque système télescopique de raccordement 10 comprend un canal intérieur 11H formé dans l'élément tubulaire 11 et adapté pour permettre un passage de fluide entre la canalisation 100 à laquelle le système télescopique se raccorde et un espace intérieur du boîtier support 2. Ceci permet de faire communiquer entre elles les canalisations 100 auxquelles le dispositif de raccordement 1 se raccorde. Mais selon un autre mode de réalisation non représenté, on peut prévoir qu'au moins un des systèmes télescopiques de raccordement 10 soit adapté pour boucher substantiellement la canalisation 100 à laquelle le système télescopique se raccorde. On peut par exemple prévoir que la partie frontale 11A d'un élément tubulaire 11 présente une paroi frontale occlusive. Par boucher substantiellement une canalisation, on entend une obturation pouvant être totale ou partielle. Dans le cas d'une obturation partielle, on pourra prévoir d'autoriser un petit passage de purge d'air pouvant laisser du liquide sortir d'une canalisation 100, par exemple au niveau d'une zone d'un joint gonflable 15 comprenant une ouverture de purge.

Comme représenté schématiquement sur la FIG.2, le moyeu 32 a été entraîné en rotation sur 90° voire un peu plus de 90° par l'actionnement en rotation de la tige de commande 31, ce qui permet aux éléments tubulaires mobiles 11 de se déployer chacun pour venir s'insérer dans l'embouchure d'une canalisation 100 correspondante. Une fois l'insertion effectuée, chaque joint gonflable 15 est gonflé en amenant de l'air sous pression par le circuit de tuyauterie 16 correspondant depuis une unité de pompage 36 située à l'extérieur du boîtier support 2, comme représenté par les flèches de circulation d'air sur la FIG.2.

Chaque circuit de tuyauterie 16 comprend une partie souple 161 apte à suivre le déploiement de l'élément tubulaire 11. Cette partie souple 161 se prolonge par une partie droite 160 fixée sur l'élément tubulaire 11 et qui se raccorde de façon étanche au joint gonflable 15. Chaque partie de tuyauterie souple 161 peut être disposée dans le boîtier support 2, ou encore à l'extérieur et à proximité de ce dernier. Les deux circuits de tuyauterie 16 communiquent entre eux par une tuyauterie de liaison 162 et comprennent une partie extérieure commune 163 disposée en dehors du boîtier 2 et s'étendant sensiblement parallèlement à la tige de commande 31 jusqu'à l'unité de pompage 36. De cette façon, les joints gonflables 15 sont gonflés quasiment simultanément.

Chaque joint gonflable 15 est prévu pour venir en contact étanche contre la paroi intérieure d'une canalisation 100, permettant ainsi un raccordement étanche entre le dispositif de raccordement 1 et les canalisations 100. Dans le premier mode de réalisation représenté, les canalisations 100 communiquent de façon fluidique entre elles grâce au dispositif de raccordement 1. Le dispositif 1 peut être prévu totalement étanche afin de ne pas laisser fuir vers l'environnement du liquide ou du gaz transporté par les canalisations 100, auquel cas la tige de commande 31 doit traverser de façon étanche au moins une paroi délimitant l'espace intérieur du boîtier support 2.

Comme représenté schématiquement sur la FIG.3, un dispositif de raccordement 1 selon le premier mode de réalisation de la FIG.1 peut avantageusement être utilisé pour être mis en place sur une cuve 4 d'un réacteur nucléaire afin d'être raccordé à des canalisations d'un circuit primaire. Un circuit primaire de refroidissement d'un réacteur à eau pressurisée comprend typiquement plusieurs boucles de refroidissement comprenant chacune un générateur de vapeur 5 ainsi qu'une branche chaude et une branche froide raccordées à la cuve. Sur la FIG.3, on a représenté les canalisations 100 de deux branches chaudes dont les embouchures se raccordant à la cuve 4 sont disposées en vis-à-vis alignées selon un même axe A1. Le dispositif de raccordement 1 est destiné à mettre en communication au moins deux branches chaudes de façon à pouvoir les remplir en eau en injectant de l'eau dans une seule branche chaude.

Le dispositif de raccordement 1 comprend un système de positionnement et de guidage 20 comprenant un châssis 21 adapté pour porter le boîtier 2. Le châssis 21 comprend des jambes télescopiques de positionnement 22 munies de vérins 23 actionnables à distance afin de pouvoir commander à distance un déplacement du châssis 21 selon une direction sensiblement verticale. Le châssis 21 comprend des orifices pour son positionnement angulaire par rapport à la cuve. Ces orifices sont prévus en correspondance de position avec des goujons verticaux 45 montés classiquement à demeure sur la cuve 4 pour la fixation d'un couvercle de cuve. On peut utiliser un pont tournant prévu en partie haute du bâtiment réacteur pour positionner le couvercle de cuve, afin de positionner angulairement le dispositif de raccordement 1 de façon à ce qu'il suffise ensuite de descendre verticalement le châssis 21 en contrôlant son positionnement altimétrique pour amener les éléments tubulaires 11 en alignement d'axe avec les embouchures des canalisations 100.

Le système de commande 35, apte à actionner en rotation la tige de commande 31, comprend une unité de motorisation supportée par le châssis 21. L'unité de pompage 36 peut aussi être prévue supportée par le châssis 21, mais en alternative on pourra prévoir de la déporter sur une plate-forme située à côté de la cuve afin d'empêcher sans difficulté tout risque de fuite d'un lubrifiant de la pompe dans la cuve.

Un dispositif de raccordement selon l'invention n'est pas limité à deux systèmes télescopiques 10 disposés selon un seul axe. On peut non seulement prévoir deux systèmes télescopiques 10 selon des axes différents, mais aussi plus de deux systèmes télescopiques selon au moins deux axes différents. Comme représenté schématiquement sur la FIG.4, un dispositif de raccordement 1' selon un deuxième mode de réalisation de l'invention est adapté pour se raccorder à quatre canalisations disposées selon deux axes A1 et A2 perpendiculaires. Le dispositif de raccordement comprend un mécanisme d'actionnement dont la première partie disposée à l'intérieur du boîtier support comprend avantageusement un moyeu commun 32' et quatre bielles articulées 33' qui relient mécaniquement le moyeu à chaque système télescopique 10.

Un système télescopique d'un dispositif de raccordement selon l'invention n'est pas nécessairement destiné à être inséré à l'intérieur de la canalisation à laquelle il se raccorde. On peut prévoir au contraire un système télescopique comprenant un élément tubulaire mobile adapté pour s'emmancher autour d'une extrémité tubulaire de la canalisation. Si on utilise un joint gonflable pour un raccordement étanche, le joint sera alors monté sur une surface intérieure de l'élément tubulaire mobile de façon à pouvoir établir un contact étanche avec une surface extérieure de l'extrémité tubulaire de la canalisation.

Bien entendu, l'invention n'est pas limitée à l'utilisation d'un joint gonflable, et tout type de joint y compris un joint à éléments rigides déployables peut être envisagé. De plus, la tige de commande 31 n'est pas nécessairement mobile en rotation, même si cette disposition présente des avantages pour réaliser une étanchéité au niveau de la paroi du boîtier 2 traversée par la tige. On pourra prévoir en alternative une tige 31 mobile en translation avec des bielles articulées du mécanisme d'actionnement disposées chacune par exemple dans un plan formé par l'axe Z de la tige et l'axe de translation du système télescopique 10 correspondant.

Par ailleurs, dans le cas d'un dispositif de raccordement destiné à se raccorder à une seule canalisation et comprenant donc un seul système télescopique, il est possible de prévoir un boîtier support communiquant avec une conduite souple ou rigide de transport de fluide afin par exemple de dévier du fluide sortant de la canalisation vers un dispositif éloigné de récupération du fluide. Une telle réalisation peut être utile par exemple dans un environnement sous-marin afin de récupérer dans un tanker du pétrole s'échappant d'une canalisation sous-marine cassée, le dispositif de raccordement pouvant être mis en place sur la canalisation sous-marine par des robots télécommandés.

## Revendications

1. Dispositif de raccordement (1, 1') destiné à se raccorder à plusieurs canalisations (100), en particulier plusieurs canalisations situées dans un environnement hostile, ledit dispositif comprenant un boîtier de support (2), un mécanisme d'actionnement (3) et plusieurs systèmes télescopiques de raccordement (10) montés sur ledit boîtier support (2) et aptes à être actionnés selon un axe de translation (A1, A2) par ledit mécanisme d'actionnement (3) afin de se déployer et se raccorder auxdites canalisations (100), dans lequel chacun desdits systèmes télescopiques de raccordement (10) est relié à une première partie (30) dudit mécanisme d'actionnement (3) disposée à l'intérieur dudit boîtier support (2), ledit mécanisme d'actionnement (3) comprenant un système de commande (35) et une tige de commande (31) traversant au moins une paroi du boîtier support (2) et reliant ladite première partie (30) audit système de commande (35) qui est disposé à l'extérieur dudit boîtier support (2), **caractérisé en ce que** ledit mécanisme d'actionnement (3) comprend une unique dite première partie (30) adaptée pour actionner ensemble lesdits plusieurs systèmes télescopiques de raccordement (10).

2. Dispositif de raccordement selon la revendication 1, **caractérisé en ce qu'**au moins un dit système télescopique de raccordement (10) comprend un canal intérieur (11H) adapté pour permettre un passage de fluide entre la canalisation (100) à laquelle il se raccorde et un espace intérieur dudit boîtier support (2).

3. Dispositif de raccordement selon la revendication 1, **caractérisé en ce qu'**au moins un dit système télescopique de raccordement (10) est adapté pour obturer substantiellement la canalisation (100) à laquelle il se raccorde.

4. Dispositif de raccordement selon l'une quelconque des revendications précédentes, **caractérisé en ce que** ladite tige de commande (31) traverse de façon étanche au moins une paroi délimitant ledit espace intérieur du boîtier support (2).

5. Dispositif de raccordement selon l'une quelconque des revendications précédentes, **caractérisé en ce que** ladite tige de commande (31) s'étend selon un axe de tige (Z) sensiblement perpendiculaire à l'axe de translation (A1, A2) de chaque système télescopique de raccordement (10) et possède une liberté de rotation autour de son axe de tige.

6. Dispositif de raccordement selon la revendication 5, **caractérisé en ce que** ladite première partie (30) du mécanisme d'actionnement comprend un moyeu (32 ; 32') solidaire en rotation de ladite tige de commande (31), ledit moyeu (32) étant relié mécaniquement à des éléments mobiles en translation (11) desdits systèmes télescopiques de raccordement par des bielles articulées (33 ; 33').

7. Dispositif de raccordement selon l'une quelconque des revendications précédentes, **caractérisé en ce qu'**au moins un dit système télescopique de raccordement (10) comprend un élément tubulaire mobile (11) déplaçable en translation par rapport audit boîtier support (2) et muni d'au moins un joint gonflable (15).

8. Dispositif de raccordement selon la revendication 7, **caractérisé en ce que** ledit élément tubulaire mobile (11) présente un diamètre extérieur inférieur à un diamètre intérieur (D) d'une canalisation (100) à laquelle il est apte à se raccorder, et **en ce que** ledit joint gonflable (15) est monté sur une surface extérieure dudit élément tubulaire.

9. Dispositif de raccordement selon la revendication 7 ou 8, **caractérisé en ce que** ledit joint gonflable (15) est alimenté en fluide par un circuit de tuyauterie (16) comprenant une partie souple (161) disposée dans ledit boîtier support (2) ou à proximité de ce dernier, ledit circuit de tuyauterie (16) comprenant en outre une partie extérieure (163) disposée en dehors dudit boîtier support et s'étendant sensiblement parallèlement à ladite tige de commande.

10. Dispositif de raccordement selon l'une quelconque des revendications précédentes, **caractérisé en ce qu'**il comprend en outre un système de positionnement et de guidage (20) comprenant un châssis (21) adapté pour porter ledit boîtier support (2).

11. Dispositif de raccordement selon la revendication 10, **caractérisé en ce que** ledit système de commande (35) comprend une unité de motorisation supportée par ledit châssis (21) et adaptée pour actionner en rotation ladite tige de commande (31).

12. Dispositif de raccordement selon la revendication 10 ou 11, **caractérisé en ce que** ledit système de positionnement et de guidage (20) comprend des jambes télescopiques de positionnement (22) supportant ledit châssis (21) et munies de vérins (23) actionnables à distance afin de pouvoir déplacer ledit châssis (21) selon une direction sensiblement verticale.

## Patentansprüche

1. Verbindungsvorrichtung (1, 1'), die dazu bestimmt ist, sich an mehrere Kanalisationen (100) anzuschließen, insbesondere an mehrere Kanalisationen, die sich in einer feindlichen Umgebung befinden, wobei die Vorrichtung ein Traggehäuse (2), einen Antriebsmechanismus (3) und mehrere teleskopische Verbindungssysteme (10) umfasst, die auf das Traggehäuse (2) montiert und geeignet sind, entlang einer Verschiebungsachse (A1, A2) von dem Antriebsmechanismus (3) angetrieben zu werden, um sich zu erweitern und sich an die Kanalisationen (100) anzuschließen, wobei jedes der teleskopischen Verbindungssysteme (10) mit einem ersten Teil (30) des Antriebsmechanismus (3), der im Inneren des Gehäuses (2) angeordnet ist, verbunden ist, wobei der Antriebsmechanismus (3) ein Steuersystem (35) und einen Steuerschaft (31) umfasst, der mindestens eine Wand des Traggehäuses (2) durchquert und den ersten Teil (30) mit dem Steuersystem (35) verbindet, das außerhalb des Traggehäuses (2) angeordnet ist, **dadurch gekennzeichnet, dass** der Antriebsmechanismus (3) einen einzigen ersten Teil (30) umfasst, der ausgebildet ist, die mehreren teleskopischen Verbindungssysteme (10) gemeinsam anzutreiben.

2. Verbindungsvorrichtung nach Anspruch 1, **dadurch gekennzeichnet, dass** mindestens ein teleskopisches Verbindungssystem (10) einen Innenkanal (11H) umfasst, der ausgebildet ist, eine Flüssigkeitspassage zwischen der Kanalisation (100), mit der es sich verbindet, und einem Innenraum des Traggehäuses (2) zu erlauben.

3. Verbindungsvorrichtung nach Anspruch 1, **dadurch gekennzeichnet, dass** mindestens ein teleskopisches Verbindungssystem (10) ausgebildet ist, die Kanalisation (100), mit der es sich verbindet, im Wesentlichen zu verschließen.

4. Verbindungsvorrichtung nach einem der vorhergehenden Ansprüche, **dadurch gekennzeichnet, dass** der Steuerschaft (31) mindestens eine Wand dicht durchquert, die den Innenraum des Traggehäuses (2) abgrenzt.

5. Verbindungsvorrichtung nach einem der vorhergehenden Ansprüche, **dadurch gekennzeichnet, dass** sich der Steuerschaft (31) entlang einer Schaftachse (Z) im Wesentlichen senkrecht zu der Verschiebungsachse (A1, A2) jedes teleskopischen Verbindungssystems (10) erstreckt und eine Rotationsfreiheit um seine Schaftachse besitzt.

6. Verbindungsvorrichtung nach Anspruch 5, **dadurch gekennzeichnet, dass** der erste Teil (30) des Antriebsmechanismus eine Nabe (32; 32') umfasst, die drehfest mit dem Steuerschaft (31) verbunden ist, wobei die Nabe (32) mechanisch mit in Verschiebung beweglichen Elementen (11) der teleskopischen Verbindungssysteme durch angelenkte Pleuel (33; 33') verbunden ist.

7. Verbindungsvorrichtung nach einem der vorhergehenden Ansprüche, **dadurch gekennzeichnet, dass** mindestens ein teleskopisches Verbindungssystem (10) ein bewegliches röhrenförmiges Element (11) umfasst, das in Verschiebung in Bezug auf das Traggehäuse (2) bewegbar und mit mindestens einer aufblasbaren Dichtung (15) versehen ist.

8. Verbindungsvorrichtung nach Anspruch 7, **dadurch gekennzeichnet, dass** das bewegliche röhrenförmige Element (11) einen Außendurchmesser aufweist, der kleiner ist als ein Innendurchmesser (D) einer Kanalisation (100), mit der es sich verbinden kann, und dass die aufblasbare Dichtung (15) auf eine äußere Oberfläche des röhrenförmigen Elements montiert ist.

9. Verbindungsvorrichtung nach Anspruch 7 oder 8, **dadurch gekennzeichnet, dass** die aufblasbare Dichtung (15) mit Flüssigkeit von einem Rohrleitungskreislauf (16) versorgt wird, der einen biegsamen Teil (161) umfasst, der in dem Traggehäuse (2) oder in der Nähe dieses Letzteren angeordnet ist, wobei der Rohrleitungskreislauf (16) außerdem einen äußeren Teil (163) umfasst, der außerhalb des Traggehäuses angeordnet ist und sich im Wesentlichen parallel zu dem Steuerschaft erstreckt.

10. Verbindungsvorrichtung nach einem der vorhergehenden Ansprüche, **dadurch gekennzeichnet, dass** sie außerdem ein Positionierungs- und Führungssystem (20) umfasst, das ein Chassis (21) umfasst, das ausgebildet ist, das Traggehäuse (2) zu tragen.

11. Verbindungsvorrichtung nach Anspruch 10, **dadurch gekennzeichnet, dass** das Steuersystem (35) eine Motorisierungseinheit umfasst, die von dem Chassis (21) getragen wird und ausgebildet ist, eine Drehung des Steuerschafts (31) anzutreiben.

12. Verbindungsvorrichtung nach Anspruch 10 oder 11, **dadurch gekennzeichnet, dass** das Positionierungs- und Führungssystem (20) teleskopische Positionierungsbeine (22) umfasst, die das Chassis (21) tragen und mit Zylindern (23) versehen sind, die aus der Ferne antreibbar sind, um das Chassis (21) entlang einer im Wesentlichen vertikalen Richtung bewegen zu können.

## Claims

1. Connecting device (1, 1') for connection to several pipes (100), in particular several pipes located in a hostile environment, said device comprising carrier housing (2), an actuating mechanism (3), and several telescopic connecting systems (10) mounted on said carrier housing (2) and suitable for actuation along an axis of translation (A1, A2) by said actuating mechanism (3) for deployment and connection to said pipes (100), wherein each of said telescopic connecting systems (10) is connected to a first portion (30) of said actuating mechanism (3) arranged within said carrier housing (2), said actuating mechanism (3) comprising a control system (35) and a control rod (31) traversing at least one wall of the carrier housing (2) and connecting said first portion (30) to said control system (35) arranged on the exterior of said carrier housing (2), **characterized in that** said actuating mechanism (3) comprises a unique said first portion (30) suitable for actuating said several telescopic connecting systems (10) together.

2. Connecting device according to claim 1, **characterized in that** at least one said telescopic connecting system (10) comprises an interior channel (11H) suitable for allowing fluid to pass between the pipe (100) to which it is connected and an interior space of said carrier housing (2).

3. Connecting device according to claim 1, **characterized in that** at least one said telescopic connecting system (10) is suitable for substantially blocking the pipe (100) to which it is connected.

4. Connecting device according to any of the preceding claims, **characterized in that** said control rod (31) sealingly traverses at least one wall delimiting said interior space of the carrier housing (2).

5. Connecting device according to any of the preceding claims, **characterized in that** said control rod (31) extends along an axis (Z) substantially perpendicular to the axis of translation (A1, A2) of each telescopic connecting system (10) and can rotate freely around its rod axis.

6. Connecting device according to claim 5, **characterized in that** said first portion (30) of the actuating mechanism comprises a hub (32, 32') rotationally integral with said control rod (31), said hub (32) being mechanically connected to elements movable in translation (11) of said telescopic connecting systems by articulated rods (33, 33').

7. Connecting device according to any of the preceding claims, **characterized in that** at least one said telescopic connecting system (10) comprises a movable tubular element (11) movable in translation with respect to said carrier housing (2) and equipped with at least one inflatable seal (15).

8. Connecting device according to claim 7, **characterized in that** said movable tubular element (11) presents an external diameter smaller than an internal diameter (D) of a pipe (100) to which it can be connected and **in that** said inflatable seal (15) is mounted on an external surface of said tubular element.

9. Connecting device according to claim 7 or 8, **characterized in that** said inflatable seal (15) is supplied with fluid from a piping circuit (16) comprising a flexible portion (161) arranged in said carrier housing (2) or near this latter, said piping circuit (16) further comprising an external portion (163) arranged outside said carrier housing and extending substantially parallel to said control rod.

10. Connecting device according to any of the preceding claims, **characterized in that** it further comprises a positioning and guidance system (20) comprising a frame (21) suitable for supporting said carrier housing (2).

11. Connecting device according to claim 10, **characterized in that** said control system (35) comprises a motor unit supported by said frame (21) and suitable for rotationally actuating said control rod (31).

12. Connecting device according to claim 10 or 11, **characterized in that** said positioning and guidance system (20) comprises telescopic positioning legs (22) supporting said frame (21) and equipped with remotely activated actuators (23) in order to move said frame (21) in a substantially vertical direction.
